# EUROPEAN PATENT SPECIFICATION

(11) **EP 3 006 779 B1**
(45) Date of publication and mention of the grant of the patent: **19.08.2020**
(21) Application number: 14188423.9
(22) Date of filing: 10.10.2014
(51) Int. Cl.: F16H 59/02, F16H 61/12

(54) **Controlling a vehicle transmission condition**
Steuerung einer Fahrzeuggetriebestörung
Contrôle de la transmission d'un véhicule

(43) Date of publication of application: 13.04.2016
(73) Proprietor: Caterpillar Inc., Deerfield, Illinois 60015 (US)
(72) Inventor: Twigger, Thomas, Spalding, Lincolnshire PE12 0XL (GB); Hills, Jonathan, Nottingham, Nottinghamshire NG2 6SG (GB); Harper, Robert, Melbourne, Derbyshire DE73 8GS (GB)
(74) Representative: BRP Renaud & Partner mbB Rechtsanwälte Patentanwälte Steuerberater

(56) References cited:
- EP-A1- 1 731 801
- EP-A2- 1 450 077
- EP-A2- 1 990 560
- GB-A- 2 423 800

## Description

### Technical Field

The present disclosure relates to a method and controller for controlling a vehicle transmission condition of a vehicle, wherein the vehicle comprises a first transmission parameter selector and a second transmission parameter selector

### Background

A number of vehicles, for example machines such as backhoe loaders, have multiple transmission direction (for example, Forward, Neutral or Reverse) controllers. For example, an operator may be able to control the transmission direction of the vehicle using a transmission direction switch (located, for example, on a joystick in the vehicle), which may allow the operator to choose a Forward, Neutral or Reverse direction, or using a transmission shift lever (located, for example, on the steering column of the vehicle), which may allow the operator to choose a Forward, Neutral or Reverse direction and a gear.

Where there are multiple transmission direction controls available to an operator, there may be potential for conflict between the transmission direction instructed by the direction controls. For example, one of the controllers may instruct a Forward transmission direction and the other controller may instruct a Reverse transmission direction.

This conflict may be avoided by requiring the operator to use only a single direction controller device at a time. For example, the vehicle transmission may be configured such that the operator must deselect all direction controller devices except for the one single direction controller device that they wish to use. If the operator wishes to start using a different direction controller device, for example because it is more convenient for a particular task that they wish to undertake, they must deselect the current direction controller device before they start using the different direction controller device. However, this may cause frustration for the operator and impact on productivity, since the operator cannot quickly and easily switch from one direction controller device to another.

US 6,938,509 B2 describes a transmission shift control for selecting forward, reverse, neutral or park. The transmission shift control may be a shift lever shiftable between forward, neutral and reverse positions. A park switch or button is also provided to activate the park brake or park lock and is configured to be selectable only when the transmission shift control is in neutral and to disengage when the transmission shift control is moved to forward or reverse. However, the disclosures of US 6,938,509 B2 do not address any issues that may arise where there are two control direction devices, each of which allow the operator to select a forward, neutral or reverse transmission direction.

EP 1450077 discloses automotive automatic transmissions of a shift-by-wire type. A range change of the transmission is effected by an actuator controlled in accordance with a range selection command signal issued from a range selector manually actuated by a driver.

EP 1 731 801 A1 discloses a forward/reverse control system for a working vehicle having a first and a second forward/reverse control means.

### Summary

The present disclosure provides a method for controlling a vehicle transmission condition of a vehicle, wherein the vehicle comprises a first transmission parameter selector and a a second transmission parameter selector, the method comprising the steps of: detecting a selector condition change in the first transmission parameter selector or the second transmission parameter selector from a previous selector condition to a new selector condition; and setting a new vehicle transmission condition on the basis of at least the previous selector condition and the new selector condition.

The present disclosure also provides a controller comprising a processor configured to execute the method.

### Brief Description of the Drawings

Aspects of the present disclosure are described below, by way of example only, with reference to the following drawings, in which:
Figure 1 shows a schematic representation of a controller for controlling a vehicle transmission condition, which may be applied to at least one of a vehicle transmission, a hydraulic controller and a diagnostic module;
Figure 2 shows a schematic representation of a process that may be executed by the controller of Figure 1 for controlling the vehicle transmission condition;
Figure 3 shows a state diagram representing changes in the vehicle transmission condition in accordance with the process of Figure 2; and
Figure 4 shows an example vehicle comprising the controller of Figure 1.

### Detailed Description

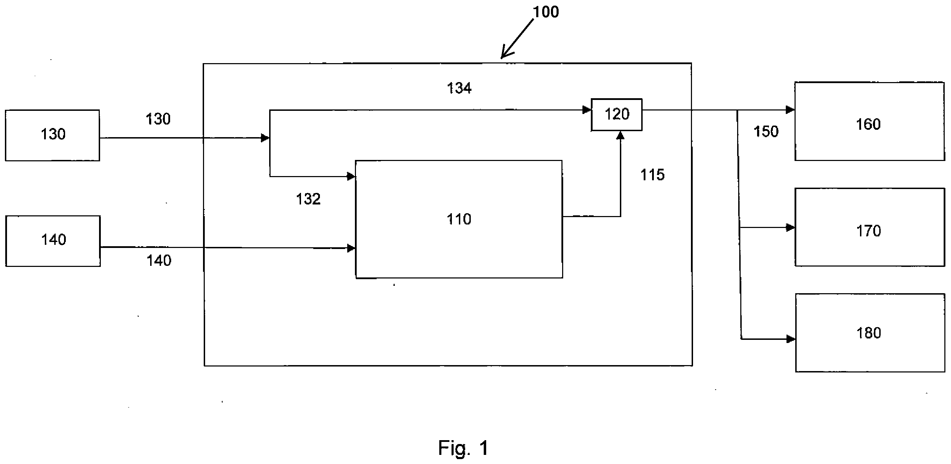

Figure 1 shows a controller 100 that may be configured to control the vehicle transmission condition of a vehicle. The vehicle may be any type of vehicle that comprises two or more transmission parameter selectors that may be operable by an operator of the vehicle. For example, the vehicle may be a domestic vehicle such as a car or van, or may be a commercial vehicle such as a lorry or truck, or may be a working vehicle, such as a backhoe loader, crane or bulldozer etc.

The controller 100 may be configured to receive two inputs: one from a first transmission parameter selector 130, and a second from a second transmission parameter selector 140. The first transmission parameter selector 130 may be separate from and/or independent from the second transmission parameter selector 140, such that their outputs may be set separately and/or independently from each other. The input from the first transmission parameter selector 130 may comprise a first transmission selection 132 and a gear selection 134.

The first transmission parameter selector 130 and the second transmission parameter selector 140 may be operator controlled. In the particular aspect described below, the parameter that may be selected by the first and second transmission parameter selectors 130, 140 is a directional condition, which may be forward, neutral or reverse. The first transmission parameter selector 130 may, for example, be a shift lever that may enable an operator to choose a first selector condition (the first transmission selection 132), for example forward, neutral or reverse. The first transmission parameter selector 130 may also allow an operator to make a gear selection 134, for example first, second or third gear. The second transmission parameter selector 140 may, for example, be a direction switch that may enable an operator to select a second selector condition, for example, forward, neutral or reverse. However, it will be appreciated that each of the first and second transmission parameter selectors 130 and 140 may take any form that may enable an operator to select a selector condition (for example, a directional condition such as F, N or R) and optionally also a gear.

The controller 100 may further comprise a vehicle transmission condition determination unit 110 configured to consider the first selector condition and the second selector condition and determine a vehicle transmission condition 115. The controller 100 may also comprise a gearing unit 120 configured to apply the gear selection 134 to the vehicle transmission condition 115 and output a vehicle transmission gear and condition 150.

The vehicle transmission gear and condition 150 may be applied to a vehicle transmission 160 in order to configure the vehicle transmission (for example, to set the transmission direction of the vehicle and optionally also the gear), and/or to a vehicle hydraulics controller 170, in order to configure how the vehicle hydraulics are controlled, and/or a vehicle diagnostics unit 180, where it may assist in diagnosing any errors or failures in the vehicle.

Each of the first and second transmission parameter selectors 130, 140 may be set by an operator to a forward (F), neutral (N) or reverse (R) direction such that each of the first and second selector conditions are F, N or R. Each of F, N and R represent a different selector condition for the first and second transmission parameter selectors 130 and 140. Each of these selector conditions may be described as directional conditions. A further selector condition for the first and second transmission parameter selectors 130, 140 may be an error condition.

An error condition may indicate an error in the first or second transmission parameter selectors 130, 140. An error condition may take the form of one or a plurality of different error values, representing different types of error. For example, the first and/or second transmission parameter selectors 130, 140 may each output an error value represented by a particular data status indicator (DSI) value, for example, a value between 1-20. Each DSI value may indicate a different error in the first or second transmission parameter selectors 130, 140. For example, one particular value of DSI (such as 13) may indicate that voltage is above normal, and another particular value of DSI (such as 7) may indicate that voltage is below normal etc. Where the first transmission parameter selector 130 has an error condition, the gear selection 134 may be set to a default value, or the gearing unit may set the gear to be applied to the vehicle transmission gear and condition 150 to a default value (for example, second gear). In this way, if the first transmission parameter selector 130 has an error condition and the vehicle transmission condition 115 is set by the second transmission parameter selector 140 (for example, to an F or R condition), a gear may still be applied to the vehicle gear and condition 150.

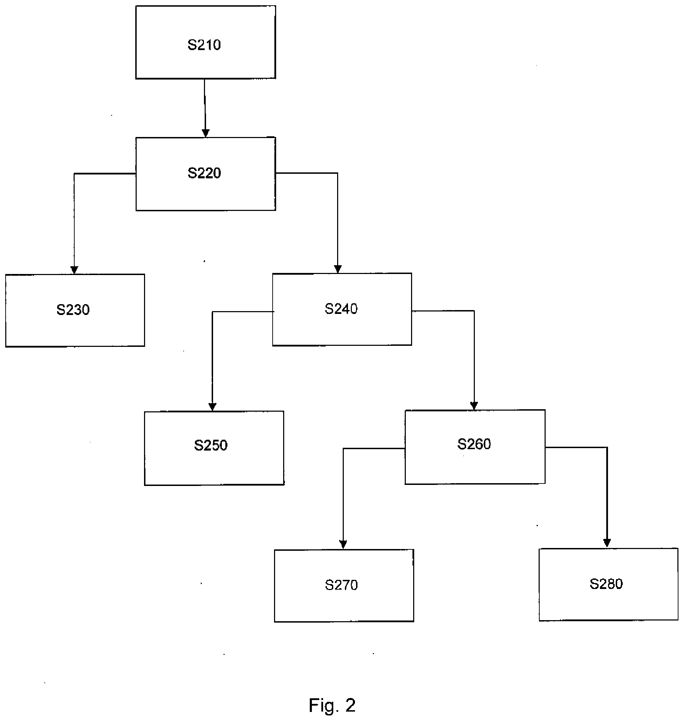

Figure 2 shows a schematic representation of how the vehicle transmission condition determination unit 110 may determine the vehicle transmission condition 115 on the basis of the selector conditions of the first and/or second transmission parameter selectors 130, 140.

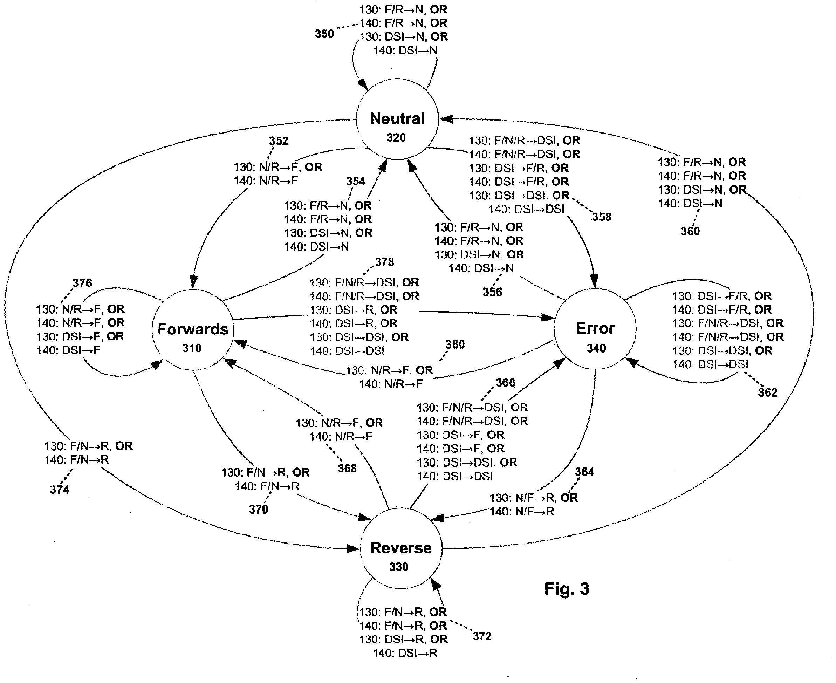

Figure 3 shows a state diagram that may assist in understanding how the vehicle transmission condition determination unit 110 may determine the vehicle transmission condition 115 according to the process represented in Figure 2.

In step S210 of Figure 2, the vehicle transmission condition determination unit 110 monitors the selector condition of the first and second transmission parameter selectors 130, 140. If the selector condition of either the first or second transmission parameter selectors 130 changes, the vehicle transmission condition determination unit 110 detects the change and the process proceeds to Step S220. For example, an operator may have changed the first transmission parameter selector 130 from N to F, or from F to R, or the second transmission parameter selector 140 may have developed a fault, such that its selector condition changes from a directional condition (such as F, N or R) to an error condition (such as DSI 5 or DSI 9), or the second transmission parameter selector 140 may have developed a different fault such that its selector condition changes from one error value (such as DSI 1) to a different error value (such as DSI 3).

A change in the selector condition of either the first transmission parameter selector 130 or the second transmission parameter selector 140 means that the vehicle transmission condition determination unit 110 may need to change the vehicle transmission condition 115. Therefore, in steps S220-S280 (which are described in more detail below), the vehicle transmission condition determination unit 110 sets a new vehicle transmission condition in consideration of at least the previous selector condition of whichever of the first transmission parameter selector 130 or the second transmission parameter selector 140 has changed, and the new selector condition of whichever of the first transmission parameter selector 130 or the second transmission parameter selector 140 has changed.

In step S220, the vehicle transmission condition determination unit 110 may determine if the previous selector condition was a selectable condition. A selectable condition may be any condition that may be selected by an operator. In the specific aspect described below, a selectable condition may be a directional condition (for example, F, N or R). However, as will be briefly explained later, it may additional or alternatively be any other parameter that may be operator selected (such as a gear selection). This is in contrast to an error condition, which may not be operator selected, but instead may come about from an error in the first or second transmission parameter selector 130, 140 without any operator selection.

If the previous selector condition was a selectable condition, the new selector condition may be considered to be trustworthy and the control process may proceed to step S230. If the previous selector condition was an error condition (for example, DSI 1, DSI 14 or DSI 17), the new selector condition may potentially be untrustworthy (as explained later), and the control process may proceed to step S240.

In step S230, a new vehicle transmission condition is set to be the new selector condition. For example: if the new selector condition is F, the vehicle transmission condition 115 is set to F; if the new selector condition is N, the vehicle transmission condition 115 is set to N; if the new selector condition is R, the vehicle transmission condition 115 is set to R, and if the new selector condition is an error condition (such as DSI 12), the vehicle transmission condition 115 is set to the transmission error condition and may take the same error value as the new selector condition (for example, DSI 12).

The new vehicle transmission condition may be the same as the previous vehicle transmission condition. For example, the previous vehicle transmission condition may have been set to F by the first transmission parameter selector 130. The second transmission parameter selector 140 may then change from N to F and the new vehicle transmission condition set to F. Alternatively, the new vehicle transmission condition may be different to the previous vehicle transmission condition. For example, the previous vehicle transmission condition may have been set to N by the second transmission parameter selector 140. The first transmission parameter selector 130 may then change from F to R and the new vehicle transmission condition be set to R, or the first transmission parameter selector 130 may change from R to an error condition (for example, DSI 2) and the new vehicle transmission condition be set to the transmission error condition with the error value of the new selector condition (for example, DSI 2).

Parts of the state diagram represented in Figure 3 show how the vehicle transmission condition 115 may be set in Step S230. A current vehicle transmission condition of F is represented by 310. Two of the changes in transition 376 are the first or second transmission parameter selectors 130 and 140 changing from a directional condition of N or R to F (130: N/R -> F, OR 140: N/R -> F). The new vehicle transmission condition is consequently set to F, such that the vehicle transmission condition 115 stays in F 310. Transition 376 also shows two further possible changes of the first or second transmission parameter selectors 130, 140 from a previous selector condition that is an error condition (DSI) to a new selector condition of F (130: DSI -> F, OR 140: DSI -> F). These changes are not applicable to Step S230 since Step S230 is only concerned with how to behave when the previous selector condition is a directional condition. Such changes from DSI -> F shall be discussed in more detail later with respect to other steps in the process shown in Figure 2. This is also true for all other transitions 350-380 shown in Figure 3 where the first or second transmission parameter selectors 130, 140 change from a previous selector condition that is an error condition (DSI) to a new selector condition.

A current vehicle transmission condition of N is represented by 320 in Figure 3. Two of the changes in transition 350 are the first or second transmission parameter selectors 130 and 140 changing from a directional condition of F or R to N (130: F/R -> N, OR 140: F/R -> N). The new vehicle transmission condition is consequently set to N, such that the vehicle transmission condition 115 stays in N 320.

A current vehicle transmission condition of R is represented by 330 in Figure 3. Two of the changes in transition 372 are the first or second transmission parameter selectors 130, 140 changing from a directional condition of F or N to R (130: F/N -> R, OR 140: F/N -> R). The new vehicle transmission condition is consequently set to R, such that the vehicle transmission condition 115 stays in R 330.

A current vehicle transmission condition of 'error' (the transmission error condition), is represented by 340 in Figure 3. In the transmission error condition 340, failure mode handling may be applied to the vehicle, whereby the vehicle transmission may be neutralised. As will be appreciated, the vehicle transmission condition 115 may be set to the transmission error condition 340 when the first or second transmission parameter selectors 130, 140 develop a fault and change to a selector condition that is an error condition. Two of the changes in transition 362 are the first or second transmission parameter selectors 130, 140 changing from a directional condition of F or N or R to the transmission error condition (130: F/N/R -> DSI, OR 140: F/N/R -> DSI). The new vehicle transmission condition is consequently set to the transmission error condition 340, such that the vehicle transmission condition 115 stays in the transmission error condition 340. For example, the vehicle transmission condition 115 may have entered the transmission error condition 340 when the first transmission parameter selector 130 developed a fault. The second transmission parameter selector 140 may then also develop a fault, thus changing from a directional condition to an error condition, which results in the new vehicle transmission condition being set to the transmission error condition 340. In this instance, whilst the vehicle transmission condition 115 stays in the transmission error condition 340, the error value (for example, the DSI value) may change to that of the new selector condition error value, such that the vehicle transmission condition 115 inherits the latest error value.

Each of transitions 352, 354, 356, 358, 360, 364, 366, 368, 370, 374, 378 and 380 show at least one change in selector condition of the first or second transmission parameter selector 130, 140 from a directional condition to a new selector condition that results in the vehicle transmission condition 115 changing. By way of example, transition 360 shows two changes (130: F/R -> N, OR 140: F/R -> N) that result in the vehicle transmission condition 115 changing from R 330 to N 320. Similar to above, at least some of the transitions 352, 354, 356, 358, 360, 364, 366, 368, 370, 374, 378 and 380 include changes of the first or second transmission parameter selectors 130 from a previous selector condition that is an error condition (DSI) to a new selector condition (for example, transition 378 shows 130: DSI ->R, OR 140: DSI -> R, OR 130: DSI -> DSI, OR 140: DSI -> DSI). Again, changes of this type are not applicable to Step S230 since Step S230 is only concerned with how to behave when the previous selector condition is a selectable condition (such as a directional condition). Changes of this type shall be discussed in more detail later with respect to other steps in the process shown in Figure 2.

Thus, a new vehicle transmission condition may be set to the new selector condition regardless of the selector condition of the other transmission parameter selector (i.e., whichever of the first or second transmission parameter selector 130, 140 has not changed), or the current vehicle transmission condition.

As explained earlier, where the previous selector condition was an error condition (for example, DSI 1, 14 or 17), the new selector condition may potentially be untrustworthy, so the control process may proceed from step S220 to step S240. The new selector condition may be untrustworthy because it may be unknown whether or not the selector condition is simply recovering from an error, or if it has changed as a result of a genuine operator command. If the selector condition is recovering from an error, it may recover into a condition that is unhelpful or dangerous. For example, the first transmission parameter selector 130 may have developed a fault and have an error condition. The second transmission parameter selector 140 may then have changed and set the vehicle transmission condition 115 to F or N. If the first transmission parameter selector 130 then recovers to R, the vehicle transmission condition 115 should not be set to R as this is not what the operator desires and the undesired change in vehicle transmission condition 115 may be unhelpful or dangerous. Therefore, how to change the vehicle transmission when the previous transmission selector condition was an error condition may be considered more carefully.

In Step S240 (see Figure 2), where the previous selector condition was an error condition, the vehicle transmission condition determination unit 110 may determine if the new selector condition is neutral (N). If the new selector condition is N, the control process may proceed to step S250. If the new selector condition is not N, the control process may proceed to step S260.

Where the first or second transmission parameter selectors 130, 140 have recovered from an error condition (the previous selector condition) to N (the new selector condition), the recovery may be considered to be safe, regardless of the current vehicle transmission condition. This is shown in Figure 3 by transitions 350, 354, 356 and 360, which include changes in the selector condition of the first or second transmission parameter selector 130, 140 from an error condition (DSI) to N. By way of example, transition 354 shows two changes (130: DSI -> N, OR 140: DSI -> N) that result in the vehicle transmission condition 115 changing from F 310 to N 320.

In Step S260 (see Figure 2), where the previous selector condition was an error condition and the new selector condition is not N, the vehicle transmission condition determination unit 110 may determine if the new selector condition is the same as the current vehicle transmission condition. If the new selector condition (for example, F, R or error) is the same as the current vehicle transmission condition (for example, F, R, N or error), the control process may proceed to step S270. If the new selector condition is not the same as the current vehicle transmission condition, the control process may proceed to step S280.

Where the new selector condition is the same as the current vehicle transmission condition, setting a new vehicle transmission condition to be equal to the new selector condition should not change the operator experience at all (since the vehicle transmission condition 115 will effectively stay the same). This is shown in Figure 3 by transitions 350, 362, 372 and 376, which include changes in the selector condition of the first or second transmission parameter selector 130, 140 from an error condition (DSI) to a new selector condition that is the same as the current vehicle transmission condition.

For example, transition 372 shows two changes (130: DSI -> R, OR 140: DSI -> R) that result in the vehicle transmission condition 115 changing from R 330 to R 330 (i.e., staying the same). Where the current vehicle transmission condition is the transmission error condition 340 and the first or second transmission parameter selector 130, 140 changes from one error value to another error value (for example from DSI 12 to DSI 16), the new vehicle transmission condition may be set to the transmission error condition 340 with the new error value, such that the vehicle transmission condition 115 inherits the new error value. This may be seen in transition 362, which shows two changes (130: DSI -> DSI, OR 140: DSI -> DSI) that result in the vehicle transmission condition 115 changing from transmission error condition 340 to transmission error condition 340 (i.e., staying the same), but the error code of the vehicle transmission condition 115 changing to the error code of the new selector condition.

In Step S280 (See Figure 2), the previous selector condition was an error condition and the new selector condition is neither N nor is it equal to the current vehicle transmission condition. The new selector condition not being equal to the current vehicle transmission condition may represent an inconvenience or danger to the operator and/or vehicle, for example if the first or second transmission parameter selector 130, 140 has recovered from an error condition to a directional condition that is F or R that is different to the current vehicle transmission condition. Therefore, if the change in transition selector condition has not been demanded by the operator, but has instead been caused by the first or second transmission parameter selector 130, 140 recovering from an error, setting a vehicle transmission condition 115 of F or R may be unexpected by the operator, and therefore cause danger. Thus, in Step S280, the new vehicle transmission condition may be set to the transmission error condition 340.

More specifically, if the previous selector condition is an error condition and the new selector condition is F or R (which is different to the current vehicle transmission condition), the new vehicle transmission condition may be set to an error value (for example, DSI 19) that indicates that the requirements for the vehicle transmission condition 115 to be set to a selectable condition (for example, F, N or R) has not been met (that requirement being that when the previous selector condition was an error condition and the new selector condition is not neutral, the new selector condition must be the same as the current vehicle transmission condition). By setting the vehicle transmission condition 115 to an error value of this type, it may be possible to diagnose (for example, by the vehicle diagnostics unit 180) why the vehicle transmission condition 115 is in the transmission error condition 340, even though one or both of the first and second transmission parameter selectors 130, 140 are in a selectable condition. This may be seen in transitions 358, 362, 366 and 378 in Figure 3, when the first or second transmission parameter selectors 130, 140 change from DSI->F, or DSI->R, or DSI->F/R. For example, transition 366 shows two changes (130: DSI -> F, OR 140: DSI -> F) that result in the vehicle transmission condition 115 changing from R 330 to the transmission error condition 340, wherein the error value may indicate that the requirements for the vehicle transmission condition 115 to be set to a selectable condition (for example, F, N or R) has not been met. As a further example, transition 362 shows two changes (130: DSI -> F/R, OR 140: DSI -> F/R) that result in the new vehicle transmission condition being set to the transmission error condition 340 (i.e., staying the same in this instance), with the error value of the vehicle transmission condition 115 being set to indicate that the requirements for the vehicle transmission condition 115 to be set to a selectable condition (for example, F, N or R) has not been met.

If the previous selector condition is an error condition and the new selector condition is an error condition (for example, with a different error value to that of the previous error condition), the new vehicle transmission condition may be set to the transmission error condition 340 with the same error value (for example, DSI 17 or DSI 18) as the new selector condition. This may be seen in transitions 358, 362, 366 or 378 in Figure 3, when the first or second transmission parameter selectors 130, 140 change from DSI->DSI. For example, transition 362 shows two changes (130: DSI->DSI, OR 130: DSI->DSI) that result in the new vehicle transmission condition being set to the transmission error condition 340 (i.e., staying the same in this instance), with the error value being set to the error value of the new selector condition, such that the vehicle transmission condition 115 inherits the new error value.

After the vehicle transmission condition determination unit 110 has set a new vehicle transmission condition in any of Steps S230, S250, S270 or S280, it may return to Step S210 to continue monitoring the selector condition of the first and second transmission parameter selectors 130, 140.

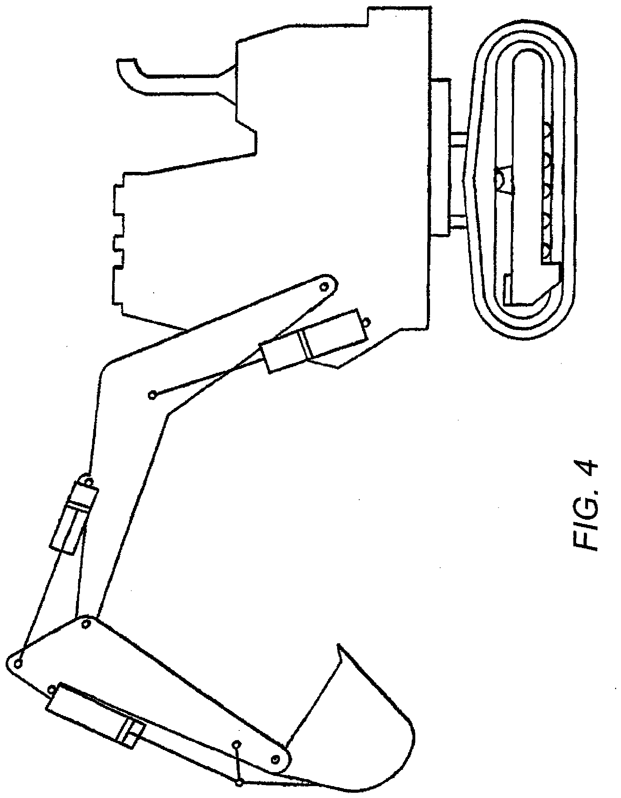

Figure 4 shows an example vehicle in which the controller 100 of Figure 2 may be used. The vehicle may further comprise the first transmission parameter selector 130 and the second transmission parameter selector 140. It may optionally further comprise at least one of the vehicle transmission 160, the vehicle hydraulics controller 170 and/or the vehicle diagnostics unit 180.

The controller 100 may be implemented in any suitable way. For example, it may form part of a multi-purpose controller, such as an engine control unit, or it may be implemented as a standalone controller. The controller 100 may comprise control logic configured to execute the processes described above. The controller 100 may be based on digital logic and/or implemented in software and/or execute the process on a microprocessor.

The skilled person will readily appreciate that a number of alterations and/or alternatives to the aspects described above may be used and fall within the scope of the present disclosure.

For example, the vehicle may comprise more than two transmission parameter selectors (for example, three, four etc.) and the vehicle transmission condition may be set in consideration of at least two of the transmission parameter selectors in the vehicle.

In the above, the first transmission parameter selector 130 may allow an operator to make a selection of a direction condition (for example, F, N or R) in the first transmission selection 132 and a gear selection 134, and that the second transmission parameter selector 140 may allow an operator to make only a selection of a direction condition (for example, F, N or R). However, in an alternative, both the first and second transmission parameter selectors 130, 140 may allow an operator to make a selection of a directional condition and a gear selection. In this case, the vehicle transmission condition determination unit 110 may be configured to set a new vehicle transmission condition in consideration of the transmission selections (i.e., the directional condition selected, or the error condition if there is a fault in the first or second transmission parameter selectors 130, 140) of the first and second transmission parameter selectors 130, 140, and the gearing unit 120 may then apply the gear selection of either the first or second transmission parameter selectors 130, 140 to set the vehicle transmission gear and condition 150 (for example, using the gear selection of whichever of the first or second transmission parameter selectors 130, 140 was most recently changed).

Alternatively, neither the first nor second transmission parameter selectors 130, 140 may allow a gear to be selected. For example, the vehicle may be have an automatic gear box and the first and second transmission parameter selectors 130, 140 may each allow only a selection of a directional condition (for example, F, N or R) to be made, or the gear selection may be made using another controller whose output is not considered by the controller 100. In either case, the vehicle transmission condition determination unit 110 may consider the outputs of both the first and second transmission parameter selectors 130, 140 in setting the vehicle transmission condition 115. Because there is no gear selection to be applied to the vehicle transmission condition 115, the controller 100 may not include a gearing unit 120 and the vehicle transmission condition 115 may be output directly from the controller 100 and optionally applied to at least one of the vehicle transmission 160, the vehicle hydraulics controller 170 and/or the vehicle diagnostics unit 180.

In the above, a selectable condition of the first and second transmission parameter selectors 130, 140 is generally described as a directional condition such as F, N or R. However, a selectable condition could be a selection of any suitable parameter that may be made by an operator. For example, the first and second vehicle transmission parameter selectors 130, 140 may allow the operator to make only a gear selection (for example, 1^{st}, 2^{nd} or 3^{rd} gear), or a selection of any other suitable parameter, wherein a selector condition that is a selectable condition is a gear selected by the operator (in contrast to a selector condition that is an error condition, which may not be selected by an operator, but instead may come about when the first or second vehicle transmission parameter selector 130, 140 is experiencing an error). In this example, each of the selected gears may be considered to be analogous to each of the directional conditions (F, N or R) above and the vehicle transmission condition 115 may be a gear (for example, 1^{st}, 2^{nd} or 3^{rd}), or the transmission error condition, that is chosen by the vehicle transmission condition determination unit 110 in accordance with the process described above.

Furthermore, in the above, a directional condition is said to be one of forward, neutral or reverse. However, it will be appreciated that at least one of the first and second transmission parameter selectors 130, 140 may be configured to allow an operator to select only two of forward, neutral or reverse (for example, only F or N in a vehicle that cannot reverse). In a further alternative the first and second transmission parameter selectors 130, 140 may be configured to allow an operator to select from at least two of forward, neutral, reverse or any other suitable condition.

In a further alternative, the vehicle transmission gear and condition 150 and the vehicle transmission condition 115 may both be output separately from the controller 100, for example because the vehicle transmission gear and condition 150 may be useful for one application (such as the vehicle transmission 160) and the vehicle transmission condition 115 may be useful for a another application (such as the vehicle diagnostics unit 180).

The vehicle transmission gear and condition 150 and/or the vehicle transmission condition 115 may be output to any applications or functions for which they may be useful, in addition, or as an alternative, to at least one of the vehicle transmission 160, the vehicle hydraulics controller 170 and/or the vehicle diagnostics unit 180.

In the above, an error condition of the first and second transmission parameter selectors 130, 140 and/or the vehicle transmission condition 115 may be an error value indicating the nature of the error in the first and second transmission parameter selectors 130, 140, and/or in the vehicle transmission condition 115 (for example, when the vehicle transmission condition 115 is set to a requirements error value). However, it will be appreciated that the error values may be of any suitable type and are not limited to DSI values. Alternatively, there may be only one error value for the first and/or second transmission parameter selectors 130, 140 and/or vehicle transmission condition 115, wherein that error value indicates merely that there is an error and not provide further indication of the nature of the error.

Furthermore, in the above, there are always two transmission parameter selectors, the first transmission parameter selector 130 and the second transmission parameter selector 140. However, in an alternative not forming part of the present invention, one of the transmission parameter selectors (for example, the second transmission parameter selector 140) may be optional. In this alternative example, the second transmission parameter selector 140 may be a factory fit option and installed on only certain vehicles where the customer has selected that option. Where the option is not selected by the customer and the vehicle has only the first transmission parameter selector 130, the same control process and state transitions as shown in Figures 2 and 3 may still be applied where a change in the first transmission parameter selector 130 has been detected by the vehicle transmission condition determination unit 110. For example, in Step S210, the vehicle transmission condition determination unit 110 monitors the selector condition of the first transmission parameter selector 130. If the selector condition of the first transmission parameter selector 130 changes, the vehicle transmission condition determination unit 110 detects the change and the process proceeds to Step S220, and continues through the further process steps as described above. Furthermore, the state diagram shown in Figure 3 may be the same, except that each transition 350-380 may include only selector condition changes in respect of the first transmission parameter selector 130.

In this way, the vehicle transmission condition determination unit 110 may still consider whether or not a change in the output of the first transmission parameter selector 130 is likely to be an intended operator command, or a recovery from an error condition, and thus the same fault handling and fault recovery processes described above may still apply.

Figure 2 of the drawings shows an example set of process steps that may be executed in order to carry out control of the vehicle transmission condition 115 in consideration of a change in the selector condition of the first or second transmission parameter selectors 130, 140. However, it will be appreciated that the above described control of the vehicle transmission condition 115 may be achieved using any suitable control process steps, carried out in any suitable order. For example, control of the vehicle transmission condition 115 in accordance with the state diagram of Figure 3 may still be achieved by the controller 100 in consideration of a change in the selector condition of the first or second transmission parameter selectors 130, 140, by carrying out any suitable process steps.

Where the vehicle has just been turned on, the vehicle transmission condition determination unit 110 may be configured initially to set the vehicle transmission condition 115 to neutral during power up and until a change in the selector condition of either the first or second transmission parameter selectors 130, 140 has been detected (at which time the control process may proceed from step S210 to S220, as described above). For example, after power-up, the selector condition of the first and/or second direction selectors 130, 140 may initialise to any condition (for example, F, N, R or error). However, these may not be trusted as they may not have been demanded by the operator, but may simply be the conditions to which the first and/or second direction selectors 130, 140 have initialised. Therefore, the vehicle transmission condition 115 may remain in neutral until a change in either the first or second transmission parameter selectors 130, 140 has been detected.

### Industrial Applicability

In the present disclosure, when a change in the selector condition of the first transmission parameter selector 130 (or optionally the second transmission parameter selector 140, where the vehicle has both first and second transmission parameter selectors) is detected, a new vehicle transmission condition is set in consideration of at least the previous selector condition and the new selector condition of the first transmission parameter selector 130 (or whichever of the first or second transmission parameter selectors has changed, where the vehicle has first and second transmission parameter selectors). By considering the previous and new selector conditions, the vehicle transmission condition 115 may be set to the most recent command (i.e. the new selector condition) of the first transmission parameter selector 130 (or the most recent command of the first and second transmission parameter selectors 130, 140, where the vehicle has first and second transmission parameter selectors), whilst avoiding putting the vehicle transmission condition 115 in a dangerous/unhelpful condition (for example, because the previous selector condition might be an error condition, which might indicate that the new selector condition should not be trusted). In this way, the vehicle transmission condition 115 may be set in a way that is responsive to operator commands, without endangering the vehicle or operator. Furthermore, the system has the flexibility to work when the vehicle has only a single transmission parameter selector, or where it has two transmission parameter selectors, or where it has more than two transmission parameter selectors. Thus, a vehicle manufacturer may offer multiple transmission parameter selectors as optional extras, and the control process will function in the same way, without modification, regardless of whether or not that option is chosen by the customer.

Furthermore, where there are two transmission parameter selectors in the vehicle, the above described control process may enable an operator immediately to use whichever of the first or second transmission parameter selectors is most convenient for the task they are undertaking without having the inconvenience of first having to deselect one of the transmission parameter selectors (thereby improving productivity) and without being exposed to the risk of the vehicle transmission condition changing in an undesired or dangerous way.

In a particular aspect, if the previous selector condition was a selectable condition, the new vehicle transmission condition may be set to the new selector condition. This is because a previous selector condition that was a selectable condition may indicate that the transmission parameter selector for which the selector condition has changed had not been experiencing an error, so the new selector condition is likely to represent a desired transmission change from the operator, so the vehicle transmission condition may quickly and responsively be changed. Where the vehicle has two transmission parameter selectors, the new vehicle transmission condition may be set to the new selector condition regardless of the selector condition of the other transmission parameter selector (i.e., whichever of the first or second transmission parameter selector 130, 140 has not changed) and regardless of the current vehicle transmission condition. This may be true even if the other transmission parameter selector is experiencing a fault and therefore has an error condition and/or if the current vehicle transmission condition is an error condition. Therefore, regardless of the selector condition of the other transmission parameter selector and the current vehicle transmission condition, a new vehicle transmission condition may quickly and safely be changed in response to the operator's request.

In a further aspect, if the previous selector condition was an error condition, the new selector condition may be untrustworthy because it may be unknown whether the new selector condition is a recovery from an error condition (and therefore not a request from the operator) or is a request from the operator. In this instance, if the new selector condition is neutral, the new selector condition may be considered safe because transitioning from a current vehicle transmission condition of F, N, R or error to a new vehicle transmission condition of N may not significantly inconvenience the operator or pose a risk to the operator or vehicle. Therefore, the new vehicle transmission condition may safely be set to N. Thus, if the change in selector condition to N was an operator requested change, the vehicle transmission condition may be quickly changed to the requested condition, and if the change was as a result of an error recover, the vehicle transmission condition may have changed in a safe way, from which the operator may then quickly and safely select the vehicle transmission condition that they desire.

In a further aspect, where the previous selector condition was an error condition and the new selector condition is not neutral, if the new selector condition is the same as the current vehicle transmission condition, the new vehicle transmission condition may be set to the new selector condition. Setting a new vehicle transmission condition to be equal to the new selector condition in this circumstance should not change the operator experience at all. Therefore, it should not matter whether or not the new selector condition is a result of operator demand or error recovery, since it should not change the operator experience or endanger the operator or vehicle. Thus, the first transmission parameter selector 130 (or second transmission parameter selector 140 where one is installed) may safely recover from an error without affecting the operator experiencing or endangering the operator or vehicle.

If, however, the previous selector condition was an error condition and the new selector condition is not neutral or same as the current vehicle transmission condition, the new vehicle transmission condition may be set to a transmission error condition. Where the vehicle transmission condition has been set to the transmission error condition, the transmission of the vehicle may respond by setting the transmission to neutral (although the vehicle transmission condition 115 will remain in the transmission error condition, and will not be set to neutral). Thus, where there is uncertainty about whether the new vehicle selector condition is a result of operator demand or error recovery, and setting a new vehicle transmission condition to be the new selector condition might endanger the vehicle or operator, the new vehicle transmission condition may be set to a safe error condition.

Furthermore, the transmission error condition may indicate that a requirement for the vehicle transmission condition to be set to a selectable condition has not been met, wherein failure to meet that requirement might indicate uncertainty as to why the selector condition of the first transmission parameter selector 130 (or the second transmission parameter selector 140, where one is installed) has changed (for example, there may be uncertainty as to whether the change is a result of an operator demanded change, or an error recovery). Setting the vehicle transmission condition to such a value may be useful for error diagnostics purposes etc.

## Claims

1. A method for controlling a vehicle transmission condition of a vehicle, wherein the vehicle has a first transmission parameter selector for selecting a transmission parameter, the method comprising the steps of:
detecting a selector condition change in the first transmission parameter selector from a previous selector condition to a new selector condition; and
setting a new vehicle transmission condition on the basis of at least the previous selector condition and the new selector condition **characterised in that**:
the vehicle further has a second transmission parameter selector for selecting the transmission parameter, and wherein the step of detecting comprises detecting a selector condition change in the first transmission parameter selector or the second transmission parameter selector from a previous selector condition to a new selector condition.

2. The method of either claim 1, wherein if the previous selector condition was a selectable condition, the new vehicle transmission condition is set to the new selector condition.

3. The method of claim 2, wherein the selectable condition comprises a directional condition.

4. The method of claim 3, wherein the directional condition is one of forward, neutral or reverse.

5. The method of any preceding claim, wherein the selectable condition comprises a gear selection.

6. The method of any preceding claim, wherein if the previous selector condition was an error condition, the new vehicle transmission condition is set to neutral if the new selector condition is neutral.

7. The method of any preceding claim, wherein if the previous selector condition was an error condition and the new selector condition is not neutral:
the new vehicle transmission condition is set to the new selector condition when the new selector condition is the same as the current vehicle transmission condition, otherwise
the new vehicle transmission condition is set to a transmission error condition.

8. The method of claim 7, wherein the transmission error condition indicates that a requirement for the vehicle transmission condition to be set to a selectable condition has not been met.

9. The method of claim 8, wherein the requirement for the vehicle transmission condition to be set to a selectable condition is:
when the previous selector condition was an error condition and the new selector condition is not neutral, the new selector condition must be the same as the current vehicle transmission condition.

10. The method of any preceding claim wherein the vehicle comprises a transmission, the method further comprising a step of:
configuring the transmission with the new vehicle transmission condition.

11. The method of any preceding claim, further comprising a hydraulics controller, the method further comprising a step of:
configuring the hydraulics controller with the new vehicle transmission condition.

12. A controller comprising control logic configured to execute the method of any preceding claim.

13. A vehicle comprising:
a first transmission parameter selector
a second transmission parameter selector; and
the controller of claim 12.

## Patentansprüche

1. Verfahren zum Steuern eines Fahrzeuggetriebezustands eines Fahrzeugs, wobei das Fahrzeug einen ersten Getriebeparameterwähler zum Auswählen eines Getriebeparameters aufweist, wobei das Verfahren die folgenden Schritte umfasst:
Erfassen einer Wählerzustandsänderung in dem ersten Getriebeparameterwähler von einem vorherigen Wählerzustand zu einem neuen Wählerzustand; und
Einstellen eines neuen Fahrzeuggetriebezustands auf der Grundlage von mindestens dem vorherigen Wählerzustand und dem neuen Wählerzustand, **dadurch gekennzeichnet, dass:**
das Fahrzeug ferner einen zweiten Getriebeparameterwähler zum Auswählen des Getriebeparameters aufweist, und wobei der
Schritt des Erfassens das Erfassen einer Wählerzustandsänderung in dem ersten Getriebeparameterwähler oder dem zweiten Getriebeparameterwähler von einem vorherigen Wählerzustand zu einem neuen Wählerzustand umfasst.

2. Verfahren nach Anspruch 1, wobei, wenn der vorherige Wählerzustand ein auswählbarer Zustand war, wird der neue Fahrzeuggetriebezustand auf den neuen Wählerzustand eingestellt.

3. Verfahren nach Anspruch 2, wobei der auswählbare Zustand einen Richtungszustand umfasst.

4. Verfahren nach Anspruch 3, wobei der Richtungszustand einer von vorwärts, neutral oder rückwärts ist.

5. Verfahren nach einem der vorstehenden Ansprüche, wobei der auswählbare Zustand eine Gangauswahl umfasst.

6. Verfahren nach einem der vorstehenden Ansprüche, wobei, wenn der vorherige Wählerzustand ein Fehlerzustand war, wird der neue Fahrzeuggetriebezustand auf neutral eingestellt, wenn der neue Wählerzustand neutral ist.

7. Verfahren nach einem der vorstehenden Ansprüche, wobei, wenn der vorherige Wählerzustand ein Fehlerzustand war und der neue Wählerzustand nicht neutral ist:
wird der neue Fahrzeuggetriebezustand auf den neuen Wählerzustand eingestellt, wenn der neue Wählerzustand der gleiche wie der aktuelle Getriebezustand ist, während andernfalls der neue Fahrzeuggetriebezustand auf einen Getriebefehlerzustand eingestellt wird.

8. Verfahren nach Anspruch 7, wobei der Getriebefehlerzustand anzeigt, dass eine Anforderung zur Einstellung des Fahrzeuggetriebezustands auf einen auswählbaren Zustand nicht erfüllt wurde.

9. Verfahren nach Anspruch 8, wobei die Anforderung zur Einstellung des Fahrzeuggetriebezustands auf einen auswählbaren Zustand folgende ist:
wenn der vorherige Wählerzustand ein Fehlerzustand war und der neue Wählerzustand nicht neutral ist, muss der neue Wählerzustand der gleiche sein wie der aktuelle Getriebezustand.

10. Verfahren nach einem der vorstehenden Ansprüche, wobei das Fahrzeug ein Getriebe umfasst, wobei das Verfahren ferner folgenden Schritt umfasst:
Konfigurieren des Getriebes mit dem neuen Fahrzeuggetriebezustand.

11. Verfahren nach einem der vorstehenden Ansprüche, ferner umfassend eine Hydrauliksteuereinrichtung, wobei das Verfahren ferner folgenden Schritt umfasst:
Konfigurieren der Hydrauliksteuereinrichtung mit dem neuen Fahrzeuggetriebezustand.

12. Steuereinrichtung, umfassend eine Steuerlogik, die dazu konfiguriert ist, das Verfahren nach einem der vorstehenden Ansprüche auszuführen.

13. Fahrzeug, umfassend:
einen ersten Getriebeparameterwähler
einen zweiten Getriebeparameterwähler; und
die Steuereinrichtung nach Anspruch 12.

## Revendications

1. Procédé de commande d'une condition de transmission de véhicule d'un véhicule, dans lequel le véhicule a un premier sélecteur de paramètre de transmission pour sélectionner un paramètre de transmission, le procédé comprenant les étapes consistant à :
détecter un changement de condition de sélecteur dans le premier sélecteur de paramètre de transmission d'une condition de sélecteur précédente à une nouvelle condition de sélecteur ; et
régler une nouvelle condition de transmission de véhicule sur la base d'au moins la condition de sélecteur précédente et la nouvelle condition de sélecteur, **caractérisé en ce que** :
le véhicule a en outre un second sélecteur de paramètre de transmission pour la sélection du paramètre de transmission, et dans lequel
l'étape de détection comprend la détection d'un changement de condition de sélecteur dans le premier sélecteur de paramètre de transmission ou le second sélecteur de paramètre de transmission d'une condition de sélecteur précédente à une nouvelle condition de sélecteur.

2. Procédé selon la revendication 1, dans lequel si la condition de sélecteur précédente était une condition sélectionnable, la nouvelle condition de transmission de véhicule est réglée à la nouvelle condition de sélecteur.

3. Procédé selon la revendication 2, dans lequel la condition sélectionnable comprend une condition directionnelle.

4. Procédé selon la revendication 3, dans lequel la condition directionnelle est une parmi avant, neutre ou inverse.

5. Procédé selon l'une quelconque des revendications précédentes, dans lequel la condition sélectionnable comprend une sélection de vitesse.

6. Procédé selon l'une quelconque des revendications précédentes, dans lequel si la condition de sélecteur précédente était une condition d'erreur, la nouvelle condition de transmission de véhicule est réglée à neutre si la nouvelle condition de sélecteur est neutre.

7. Procédé selon l'une quelconque des revendications précédentes, dans lequel si la condition de sélecteur précédente était une condition d'erreur et que la nouvelle condition de sélecteur n'est pas neutre :
la nouvelle condition de transmission de véhicule est réglée à la nouvelle condition de sélecteur lorsque la nouvelle condition de sélecteur est la même que la condition actuelle de transmission de véhicule, sinon
la nouvelle condition de transmission de véhicule est réglée à une condition d'erreur de transmission.

8. Procédé selon la revendication 7, dans lequel la condition d'erreur de transmission indique qu'une exigence pour la condition de transmission de véhicule devant être réglée à une condition sélectionnable n'a pas été satisfaite.

9. Procédé selon la revendication 8, dans lequel l'exigence pour la condition de transmission de véhicule devant être réglé à une condition sélectionnable est :
lorsque la condition de sélecteur précédente était une condition d'erreur et que la nouvelle condition de sélecteur n'est pas neutre, la nouvelle condition de sélecteur doit être la même que la condition actuelle de transmission de véhicule.

10. Procédé selon l'une quelconque des revendications précédentes, dans lequel le véhicule comprend une transmission, le procédé comprenant en outre une étape consistant à :
configurer la transmission avec la nouvelle condition de transmission de véhicule.

11. Procédé selon l'une quelconque des revendications précédentes, comprenant en outre un dispositif de commande hydraulique, le procédé comprenant en outre une étape consistant à :
configurer le dispositif de commande hydraulique avec la nouvelle condition de transmission de véhicule.

12. Dispositif de commande comprenant une logique de commande configurée pour exécuter le procédé selon l'une quelconque des revendications précédentes.

13. Véhicule comprenant :
un premier sélecteur de paramètre de transmission
un second sélecteur de paramètre de transmission ; et
le dispositif de commande selon la revendication 12.
